# EUROPEAN PATENT APPLICATION

(11) **EP 4 002 255 A1**
(43) Date of publication of application: **25.05.2022**
(21) Application number: 21208539.3
(22) Date of filing: 16.11.2021
(51) Int. Cl.: G06Q 30/02, H04L 67/50

(54) **METHOD, APPARATUS, AND COMPUTER DEVICE FOR CALCULATING WEBSITE USER CREDIT POINT**

(30) Priority: 17.11.2020 CN 202011282954
(71) Applicant: Shenzhen Sekorm Component Network Co., Ltd, Shenzhen, Guangdong (CN)
(72) Inventor: XU, Yangui, Shenzhen (CN)
(74) Representative: Westphal, Mussgnug & Partner, Patentanwälte mbB

(57) **Abstract**

The present invention relates to a method, an apparatus, and a computer device for calculating website user credit points. The method includes: S1, receiving a visit request from a user, and recording a network address to which the visit request corresponds and a user account; S2, determining whether the network address matches a preset bonus-rewarding network address or not; and S3, if yes, the user account acquiring a corresponding credit point, in which each preset bonus-rewarding network address corresponds to a credit point. The present invention makes collective recording of a user's visits to network addresses and calculates the credit point of the user from the recorded network addresses, so that calculation is simple and management is easy.

## Description

### FIELD OF THE INVENTION

The present invention relates to the field of website membership management, and more particularly to a method, an apparatus, and a computer device for calculating website user credit points.

### DESCRIPTION OF THE RELATED ART

An organization may sometimes offer certain benefits to members of a website platform by distributing credit in response to certain operations or valuable contribution provided by users. Redemption can be made for virtual or physical rewards after the credit points have been accumulated to a certain level. In the known technology, credit point calculation involves event tracking included in the business of a website, and when the operation of a user triggers the event tracking, calculation will be made for a credit point. A disadvantage of such as credit-point event tracking is that triggers must be arranged at various locations for credit point calculation, and it is hard to identify which locations are involved in the logic of credit point calculation, making management thereof difficult.

### SUMMARY OF THE INVENTION

The technical issue that the present invention aims to resolve is to provide, in view of the deficiency of the prior art, a method, an apparatus, and a computer device for calculating website user credit points.

The technical solution that the present invention adopts to resolve the technical issue is to construct a method for calculating website user credit points, which comprises:
S1: receiving a visit request from a user, and recording a network address to which the visit request corresponds and a user account;
S2: determining whether the network address matches a preset bonus-rewarding network address or not; and
S3: if yes, the user account acquiring a corresponding credit point, wherein each said preset bonus-rewarding network address corresponds to a credit point.

Further, in the method for calculating website user credit points according to the present invention, in Step S1, recording a network address to which the visit request corresponds and a user account comprises S11: recording the network address to which the visit request corresponds and the user account in a Nginx log; and

Step S2 comprises S21: determining whether the network address in the Nginx log matches the preset bonus-rewarding network address or not.

Further, the method for calculating website user credit points according to the present invention further comprises, after Step S11 and before Step S21:
S121: reading the user account and the network address corresponding thereto recorded in the Nginx log at a preset time point; or
S122: reading the user account and the network address corresponding thereto recorded in the Nginx log at time points at preset intervals.

Further, in the method for calculating website user credit points according to the present invention, in Step S121 and Step S122, reading the user account and the network address corresponding thereto recorded in the Nginx log comprises:
reading the user account and the network address corresponding thereto recorded in the Nginx log after the last reading.

Further, in the method for calculating website user credit points according to the present invention, Step S11 comprises Sill: recording the network address to which the visit request corresponds and the user account in the Nginx log of a first server; and
Step S21 comprises S211: a second server determining whether the network address in the Nginx log matches the preset bonus-rewarding network address or not.

Further, the method for calculating website user credit points according to the present invention further comprises, after Step Sill and before Step S211:
the first server transmitting the user account and the network address corresponding thereto that are recorded in the Nginx log after last transmission to the second server at a preset time point; or
the first server transmitting the user account and the network address corresponding thereto that are recorded in the Nginx log after the last transmission to the second server at time points at preset intervals.

Further, in the method for calculating website user credit points according to the present invention, in Step S1, recording the network address to which the visit request corresponds and the user account comprises recording the network address to which the visit request corresponds, the user account, and request parameter data; and
in Step S3, each said preset bonus-rewarding network address corresponding to a credit point comprises: each said preset bonus-rewarding network address corresponding to a credit point, and the request parameter data being applied to adjust the credit point.

Further, in the method for calculating website user credit points according to the present invention, in Step S3, each said preset bonus-rewarding network address corresponding to a credit point comprises:
each said preset bonus-rewarding network address corresponding to a credit point, and an account level to which the user account corresponds being applied to adjust the credit point.

Further, the present invention also provides an apparatus for calculating website user credit points, which comprises:
a recording unit, which is operable for receiving a visit request from a user, and recording a network address to which the visit request corresponds and a user account;
a determination unit, which is operable for determining whether the network address matches a preset bonus-rewarding network address or not; and
a credit-point unit, which is operable such that if the network address matches up the preset bonus-rewarding network address, the user account acquires a credit point associated with the preset bonus-rewarding network address, wherein each said preset bonus-rewarding network address corresponds to a credit point.

Further, the present invention further provides a computer device, which comprises a storage and a processor;
the storage storing a computer program; and
the processor executing the computer program stored in the storage in order to perform the method for calculating website user credit points described above.

The method, the apparatus, and the computer device that embody the present invention possess the following efficacy: The present invention makes collective recording of a user's visits to network addresses and calculates the credit point of the user from the recorded network addresses, so that calculation is simple and management is easy.

### BRIEF DESCRIPTION OF THE DRAWINGS

A detailed description of the present invention will be provided below with reference to the attached drawings and embodiments. In the drawings:
FIG. 1 is a flow chart illustrating a method for calculating website user credit point provided according to an embodiment of the present invention;
FIG. 2 is a flow chart illustrating a method for calculating website user credit point provided according to an embodiment of the present invention; and
FIG. 3 is a flow chart illustrating a method for calculating website user credit point provided according to an embodiment of the present invention; and
FIG. 4 is a flow chart illustrating a method for calculating website user credit point provided according to an embodiment of the present invention.

### DETAILED DESCRIPTION OF PREFERRED EMBODIMENTS OF THE INVENTION

For better understanding of the technical features, purposes, and efficacy of the present invention, embodiments of the present invention will be described in detail with reference to the attached drawings.

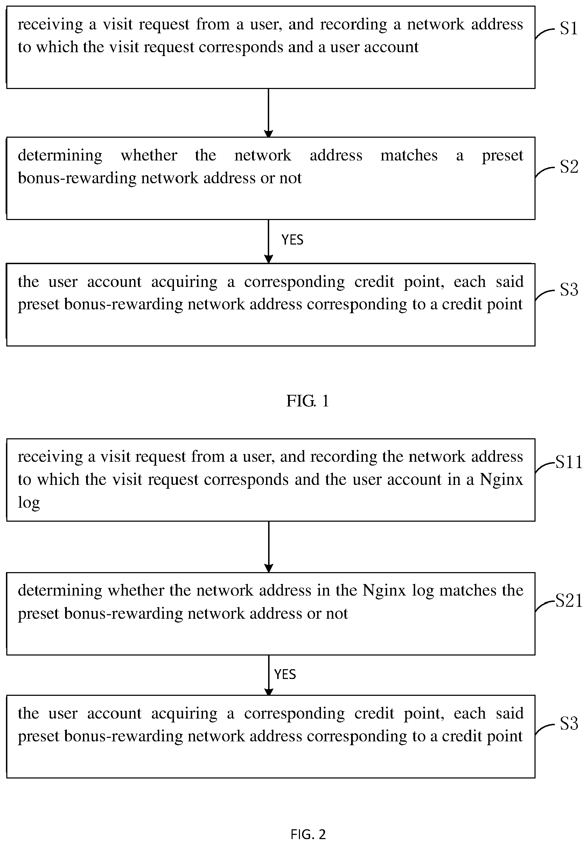

In a preferred embodiment, referring to FIG. 1, a method for calculating a website user credit point comprises the following steps:
S 1: receiving a visit request from a user, and recording a network address to which the visit request corresponds and a user account. The user first uses an own user account to log in the website, and after logging in, all operations made by the user are recorded in the user account. When the user carries out a related operation on the webpage, each function of the webpage corresponds to a network address, and with the user issuing a visit request to a specific function of the webpage, the visit request triggers the corresponding network address, so that corresponding contents of the server according to the network address can be visited. At this time, the network address to which the visit request corresponds and the user account are recorded.
S2: determining whether the network address matches a preset bonus-rewarding network address or not. The preset bonus-rewarding network address is a network address that enables a reward of bonus, and each preset bonus-rewarding network address is associated with a credit point, meaning each network address that enables a reward of bonus is associated with a credit point, and different network addresses may be associated with an identical credit point, or may alternatively be associated with different ones, and the arrangement can be made as desired.
S3: if the network address matches up the preset bonus-rewarding network address, the user account acquiring a credit point associated with the preset bonus-rewarding network address; and if the network address does not match up the preset bonus-rewarding network address, the user account not acquiring the credit point. Optionally, the credit points offered to the same user account will be automatically added up and a total credit point is displayed.

The instant embodiment makes collective recording of a user's visits to network addresses and calculates the credit points of the user from the recorded network addresses, so that calculation is simple and management is easy.

In a preferred embodiment, referring to FIG. 2, a method for calculating website user credit points comprises the following steps:
S11: receiving a visit request from a user, and recording a network address to which the visit request corresponds and a user account in a Nginx log. The user first uses an own user account to log in the website, and after logging in, all operations made by the user are recorded in the user account. When the user carries out a related operation on the webpage, each function of the webpage corresponds to a network address, and with the user issuing a visit request to a specific function of the webpage, the visit request triggers the corresponding network address, so that corresponding contents of the server can be visited according to the network address, and a Nginx log of the server automatically records the instant visit, namely the network address to which the visit request corresponds and the user account are recorded in the Nginx log.
S21: determining whether the network address in the Nginx log matches a preset bonus-rewarding network address or not. When it is time to calculate a credit point, the server reads in the network addresses recorded in the Nginx log, and matches each of the network addresses with the preset bonus-rewarding network address.
S3: if the network address matches up the preset bonus-rewarding network address, the user account acquiring a credit point associated with the preset bonus-rewarding network address; and if the network address does not match up the preset bonus-rewarding network address, the user account not acquiring the credit point. Optionally, the credit points offered to the same user account will be automatically added up and a total credit point is displayed.

The instant embodiment makes collective recording of a user's visits to network addresses in the Nginx log and calculates the credit point of the user from the recorded network addresses, so that calculation is simple and management is easy.

In some embodiments, to reduce the number of transmissions of the Nginx log and to reduce consumption of resources of the server, the instant embodiment adopts an arrangement of making transmission at intervals for transmitting the network address. Optionally, it further includes, after Step S11 and before Step S21, S121: reading the user account and the network address corresponding thereto recorded in the Nginx log at a preset time point, wherein there may be multiple ones of such preset time point, and the arrangement can be made as desired.

In some embodiments, to reduce the number of transmissions of the Nginx log and to reduce consumption of resources of the server, the instant embodiment adopts an arrangement of making transmission at intervals for transmitting the network address. Optionally, it further includes, after Step S11 and before Step S21, S122: reading the user account and the network address corresponding thereto recorded in the Nginx log at preset time intervals, wherein the arrangement of the present time intervals can be made as desired, such as 1 minute, 10 minutes, 30 minutes, and 1 hour.

In some embodiments, since all the network addresses where the user visits are stored in the Nginx log, the Nginx log contains a massive amount of network address, and reading all the network addresses contained in the Nginx log for each time would cause great consumption of the server and also leads to repeated counting of credit points. To resolve such an issue, in the instant embodiment, the Nginx log is only operable to do match for network addresses that are newly added after the last reading, meaning reading is only made to the user account and the network address corresponding thereto recorded in the Nginx log after the last reading.

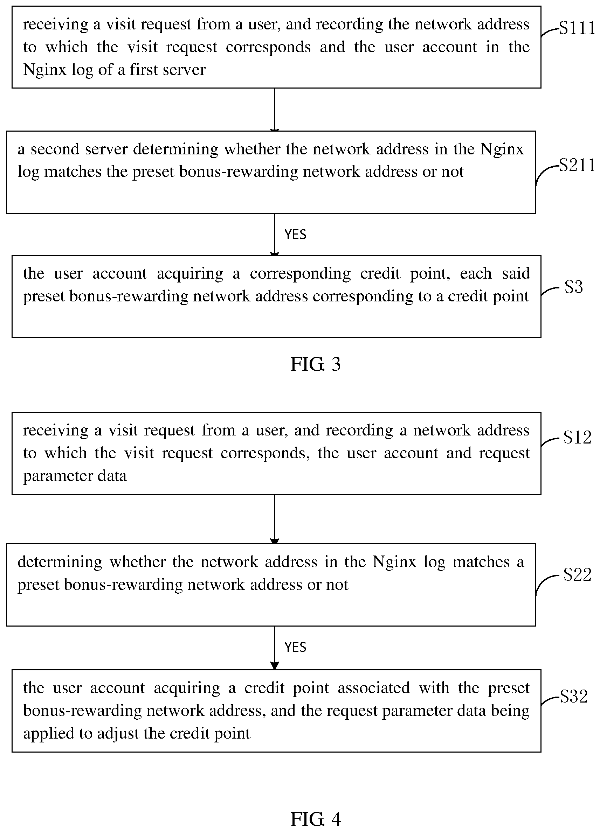

In a preferred embodiment, referring to FIG. 3, the server comprises a first server and a second server, wherein the first server is configured to store a Nginx log, and the second server is configured for matching a user and calculating a credit point. A method for calculating website user credit points comprises the following steps:
Sill: receiving a visit request from a user, and recording a network address to which the visit request corresponds and a user account in the Nginx log of the first server. The user first uses an own user account to log in the website, and after logging in, all operations made by the user are recorded in the user account. When the user carries out a related operation on the webpage, each function of the webpage corresponds to a network address, and with the user issuing a visit request to a specific function of the webpage, the visit request triggers the corresponding network address, so that corresponding contents of the first server can be visited according to the network address, and the Nginx log of the first server automatically records the instant visit, namely the network address to which the visit request corresponds and the user account are recorded in the Nginx log of the first server.
S211: the second server determining whether the network address in the Nginx log matches a preset bonus-rewarding network address or not. The second server stores a Nginx log that contains multiple preset bonus-rewarding network addresses, and also stores a program algorithm for matching the network address with the preset bonus-rewarding network addresses. The preset bonus-rewarding network addresses are network addresses that enable rewards of bonus, and each preset bonus-rewarding network address is associated with a credit point, meaning each network address that enables a reward of bonus is associated with a credit point, and different network addresses may be associated with an identical credit point, or may alternatively be associated with different ones, and the arrangement can be made as desired.
S3: if the network address matches up the preset bonus-rewarding network addresses, the user account acquiring credit points associated with the preset bonus-rewarding network addresses; and if the network address does not match up the preset bonus-rewarding network addresses, the user account not acquiring the credit points. Optionally, the credit points offered to the same user account will be automatically added up and a total credit point is displayed.

The instant embodiment uses two servers, and the network addresses visited by the user are collectively recorded in the Nginx log of the first server, while the second server is configured to calculate the credit points of the user, so that calculation is simple and management is easy.

In some embodiments, to reduce the number of transmissions of the Nginx log and to reduce consumption of resources of the server, the instant embodiment adopts an arrangement of making transmission at intervals for transmitting the network address. Optionally, it further includes, after Step Sill and before Step S211: the first server transmitting a user account and a network address corresponding thereto that are recorded in the Nginx log after the last transmission to the second server at a preset time point, and the preset time point can be selected as desired.

In some embodiments, to reduce the number of transmissions of the Nginx log and to reduce consumption of resources of the server, the instant embodiment adopts an arrangement of making transmission at intervals for transmitting the network address. Optionally, it further includes, after Step Sill and before Step S211: the first server transmitting a user account and a network address corresponding thereto that are recorded in the Nginx log after the last transmission to the second server at preset time intervals, wherein the arrangement of the present time intervals can be made as desired, such as 1 minute, 10 minutes, 30 minutes, and 1 hour.

In some embodiments, referring to FIG. 4, to make the credit point model more reasonable and more comprehensive, an item as reference for calculation of credit point is additionally included, and in the instant embodiment, a method for calculating website user credit points comprises the following steps:
S12: receiving a visit request from a user, and recording a network address to which the visit request corresponds, a user account, and request parameter data. The user first uses an own user account to log in the website, and after logging in, all operations made by the user are recorded in the user account. When the user carries out a related operation on the webpage, each function of the webpage corresponds to a network address, and with the user issuing a visit request to a specific function of the webpage, the visit request triggers the corresponding network address, so that corresponding contents of the server can be visited according to the network address, and a Nginx log of the server automatically records the instant visit, namely the network address to which the visit request corresponds, the user account, and the request parameter data are recorded in the Nginx log. Optionally, the request parameter data comprise a time length of visit, a location of visit, subscribing or not, storing or not, downloading or not, and forwarding or not.
S22: determining whether the network address in the Nginx log matches a preset bonus-rewarding network address or not. When it is time to calculate a credit point, the server reads in the network addresses recorded in the Nginx log, and matches each of the network addresses with the preset bonus-rewarding network address.
S32: if the network address matches up the preset bonus-rewarding network address, the user account acquiring a credit point associated with the preset bonus-rewarding network address, and the request parameter data being applied to adjust the credit point, such as each request parameter data corresponding to a weighing value and the credit point associated with the preset the bonus-rewarding network address being multiplied with the weighing value to obtain the credit point of the network address; and if the network address does not match up the preset bonus-rewarding network address, the user account not acquiring the credit point. Optionally, the credit points offered to the same user account will be automatically added up and a total credit point is displayed.

The instant embodiment additionally involves the request parameter data to serve as a reference for calculation of the credit point, so as to make the credit point model more reasonable and more comprehensive.

In some embodiments, in Step S3, each said preset bonus-rewarding network address corresponding to a credit point includes: each said preset bonus-rewarding network address corresponding to a credit point, an account level to which the user account corresponds being applied to adjust the credit point, namely users of different levels acquiring credit points that are different even a same operation is performed.

A preferred embodiment provides an apparatus for calculating website user credit points which comprises:
a recording unit, which is configured for receiving a visit request from a user, and recording a net address to which the visit request corresponds and a user account. The user first uses an own user account to log in the website, and after logging in, all operations made by the user are recorded in the user account. When the user carries out a related operation on the webpage, each function of the webpage corresponds to a network address, and with the user issuing a visit request to a specific function of the webpage, the visit request triggers the corresponding network address, so that corresponding contents of the server can be visited according to the network address. At this time, the network address to which the visit request corresponds and the user account are recorded.
a determination unit, which is configured for determining whether the network address matches a preset bonus-rewarding network address or not. The preset bonus-rewarding network address is a network address that enables a reward of bonus, and each preset bonus-rewarding network address is associated with a credit point, meaning each network address that enables a reward of bonus is associated with a credit point, and different network addresses may be associated with an identical credit point, or may alternatively be associated with different ones, and the arrangement can be made as desired.
a credit-point unit, which is operable such that if the network address matches up the preset bonus-rewarding network address, the user account acquires a credit point associated with the preset bonus-rewarding network address; and if the network address does not match up the preset bonus-rewarding network address, the user account does not acquire the credit point. Optionally, the credit points offered to the same user account will be automatically added up and a total credit point is displayed.

A preferred embodiment provides a computer device, and the computer device comprises a storage and a processor, wherein the storage stores a computer program; and the processor executes the computer program stored in the storage in order to perform the method for calculating website user credit point provided in the above embodiments.

The instant embodiment makes collective recording of a user's visits to network addresses and calculates the credit point of the user from the recorded network addresses, so that calculation is simple and management is easy.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they are corresponding to the methods disclosed in the embodiments, and the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the exchangeability of hardware and software, the illustration provided above demonstrates the components and steps of each example with a general description according to functions thereof. Whether such functions can be implemented with hardware or software is determined by the specific application and design requirement conditions of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical thoughts and features of the present invention, for the purposes to help those skilled in the art to understand the contents of the present invention and to accordingly put into practice, and should not be construed as limiting to the scope of protection for the present invention. All variations and modifications that are considered equivalent to the scope of the appended claims of the application belong to the scope of the present invention as defined solely by the appended claims.

## Claims

1. A method for calculating website user credit points, **characterized by** comprising:
S1: receiving a visit request from a user, and recording a network address to which the visit request corresponds and a user account;
S2: determining whether the network address matches a preset bonus-rewarding network address or not; and
S3: if yes, the user account acquiring a corresponding credit point, wherein each said preset bonus-rewarding network address corresponds to a credit point.

2. The method for calculating website user credit points according to claim 1, **characterized in that** in Step S1, recording a network address to which the visit request corresponds and a user account comprises S11: recording the network address to which the visit request corresponds and the user account in a Nginx log; and
Step S2 comprises S21: determining whether the network address in the Nginx log matches the preset bonus-rewarding network address or not.

3. The method for calculating website user credit points according to claim 2, **characterized by** further comprising, after Step S11 and before Step S21:
S121: reading the user account and the network address corresponding thereto recorded in the Nginx log at a preset time point; or
S122: reading the user account and the network address corresponding thereto recorded in the Nginx log at preset time intervals.

4. The method for calculating website user credit points according to claim 3, **characterized in that** in Step S121 and Step S122, reading the user account and the network address corresponding thereto recorded in the Nginx log comprises:
reading the user account and the network address corresponding thereto recorded in the Nginx log after last reading.

5. The method for calculating website user credit points according to claim 2, **characterized in that** Step S11 comprises S111: recording the network address to which the visit request corresponds and the user account in the Nginx log of a first server;
Step S21 comprises S211: a second server determining whether the network address in the Nginx log matches the preset bonus-rewarding network address or not.

6. The method for calculating website user credit points according to claim 5, **characterized by** further comprising, after Step Sill and before Step S211:
the first server transmitting the user account and the network address corresponding thereto that are recorded in the Nginx log after last transmission to the second server at a preset time point; or
the first server transmitting the user account and the network address corresponding thereto that are recorded in the Nginx log after the last transmission to the second server at preset time intervals.

7. The method for calculating website user credit points according to claim 1, **characterized in that** in Step S1, recording the network address to which the visit request corresponds and the user account comprises recording the network address to which the visit request corresponds, the user account, and request parameter data; and
in Step S3, each said preset bonus-rewarding network address corresponding to a credit point comprises: each said preset bonus-rewarding network address corresponding to a credit point, and the request parameter data being applied to adjust the credit point.

8. The method for calculating website user credit points according to claim 1, **characterized in that** in Step S3, each said preset bonus-rewarding network address corresponding to a credit point comprises:
each said preset bonus-rewarding network address corresponding to a credit point, and an account level to which the user account corresponds being applied to adjust the credit point.

9. An apparatus for calculating website user credit points, **characterized by** comprising:
a recording unit, configured for receiving a visit request from a user, and recording a network address to which the visit request corresponds and a user account;
a determination unit, configured for determining whether the network address matches a preset bonus-rewarding network address or not; and
a credit-point unit, which is operable such that if the network address matches up the preset bonus-rewarding network address, the user account acquires a credit point associated with the preset bonus-rewarding network address, wherein each said preset bonus-rewarding network address corresponds to a credit point.

10. A computer device, **characterized by** comprising a storage and a processor;
the storage being configured for storing a computer program; and
the processor being configured for executing the computer program stored in the storage in order to perform the method for calculating website user credit points according to any one of claims 1-8.
